# EUROPEAN PATENT SPECIFICATION

(11) **EP 1 694 991 B1**
(45) Date of publication and mention of the grant of the patent: **24.12.2008**
(21) Application number: 04782576.5
(22) Date of filing: 30.08.2004
(51) Int. Cl.: F16K 15/20

(54) **PRESSURE RELIEF VALVE IN CONNECTOR ASSEMBLY OF INFLATABLE ARTICLES**
ENTLASTUNGSVENTIL IN VERBINDERANORDNUNG VON AUFBLASBAREN ARTIKELN
RACCORD EQUIPE D'UNE SOUPAPE DE SURETE, POUR ARTICLES GONFLABLES

(30) Priority: 18.12.2003 US 742615; 09.02.2004 US 776001
(43) Date of publication of application: 30.08.2006
(73) Proprietor: Gore Enterprise Holdings, Inc., Newark, DE 19714-9206 (US)
(72) Inventor: SCHREINER, Juergen, 83052 Heufeld (DE); TRAPP, Benjamin, M., Flagstaff, AZ 86001 (US); CULLER, Gregory, D., Nottingham, PA 19362 (US); LACK, Craig, D., Hockessin DE 19707 (US)
(74) Representative: Shanks, Andrew
(86) International application number: PCT/US2004/028128
(87) International publication number: WO 2005/068881

(56) References cited:
- EP-A- 0 393 594
- EP-A- 0 485 362
- GB-A- 426 786
- US-A- 2 064 695

## Description

### FIELD OF THE INVENTION

The present invention relates to a pressure relief valve incorporated in a connector assembly, more preferably a low profile connector assembly, for connecting a source of inflation fluid, e.g., air or liquid, to a flexible inflatable article such as an inflatable garment, an air mattress, a flexible canteen, or other similar-in-principle construction.

### BACKGROUND OF THE INVENTION

Inflatable articles which are relatively flexible in use exist for a wide range of applications from air inflatable garments, mattresses, sleeping bags, and the like, to liquid inflatable canteens, bladders, heating/cooling pads, and other similar-in-principle constructions. As used herein, the term inflatable is intended to refer to the ability to create some pressure gradient between the interior and exterior of an article. In certain instances the inflation pressure may be significant (e.g., pressure gradients of 0.07 bar (1.0 psi or above): however, in other instances only a slight pressure gradient may exist, and the article may be designed to permit air or liquid leakage above some pressure gradient. The term flexible is intended to refer to materials having a flexural rigidity, as described in more detail herein, of 50,000 N*m or less, preferably 1000 N*m or less, and most preferably 200 N*m or less.

Inflatable articles, for example, air mattresses, are generally provided with an inflation valve. Such valves can be simple plastic tubes affixed to a wall of the inflatable articles and having a stop cock affixed thereto. Opening the stop cock mallows for deflation of the inflatable article or for inflation through the tube by manual means such as by a person blowing air through the tube and into the inflatable article. Alternatively, various types of pumps are available and have been employed to force air into such inflatable articles. Especially suited for Inflatable garments and the like is a bellows pump disclosed in U.S. Patent Application Serial No. 10/230,889*,* which is commonly assigned. The term air is used for convenience herein; however, it should be appreciated that other suitable gases may be used depending on the specific application of the article.

In the case of liquid inflatable articles, collapsible or other suitably flexible canteens and bladders exist typically incorporating screw-on or snap-on fill ports affixed to the collapsible container and extending substantially perpendicular therefrom.

Pressure relief valves incorporated into inflatable articles, such as garments and the like have been taught. U.S. Patent Application Publicatidn No. 2003-0108141 is directed to an inflatable, breathable module having one or more inflatable cavities in the module and which further incorporates a pressure relief means for reducing pressure in the inflated portion(s) should the module be subjected to sudden or excessive stress.

EP 0485362 describes a patient support structure having a number of inflatable sacks. The document also describes an inflation assembly for connecting the inflatable sacks to an inflation source. The assembly comprises a connection member having a first, generally tubular insertable section, insertable through an adaptor of the sack and a second external pipe extending oppositely from the insertable section and outwardly from the sack upon insertion. The external section and the insertable section are connected, the two sections providing a continuous air passageway in to the sack. The insertable section has an external circumferential groove there around which, upon insertion into and through said sack adaptor is secured by a sealing ring. The ring is stretched into the groove, the ring providing a seal at the adaptor, thereby sealing off leakage of fluid to or from said sack and confining fluid passage to and through the passageway, thereby providing, when assembled, a pathway for fluid communication from the external source into the inflatable sack.

A need has existed for an improved assembly for a flexible inflatable article which provides ease of connection and disassembly from an external inflation source, is relatively simple to incorporate in a continuous manufacturing operation, presents a low profile during manufacturing and in use when affixed to a flexible inflatable article, and which further incorporates a pressure relief means. The present invention provides such an assembly. Other advantages of the connector assembly of the invention will become apparent from the following specification.

### SUMMARY OF THE INVENTION

A low-profile connector assembly for connecting a flexible inflatable article to a source of inflation fluid, e.g., air or liquid, and which further incorporates a pressure relief means is provided. The assembly includes a semi-rigid, hollow connector housing having a first, generally tubular, insertable section, insertable through an opening in a flexible wall of the inflatable article. A second external section extends oppositely from the insertable section and outwardly from the flexible wall upon insertion. The external section and the insertable section are connected and oriented generally at an angle with respect to each other (i.e., less than 180 degrees), more preferably at a substantially right angle, The two sections provide a continuous air or liquid passageway therethrough into the inflatable article upon insertion therein, the passageway extending from an external opening in the external section, which is removably connectable thereat to a source of inflation air or liquid. The passageway extends through the connector assembly and into the inflatable article.

The insertable section has an external circumferential groove therearound which, upon insertion into and through the flexible wall opening, is secured thereat by an elastic washer positioned immediately adjacent to and concentric with the wall opening. By positioned it is meant that the washer may be held against the wall by compression between the wall and the insertable section, or affixed by means of some bond (e.g., adhesive, heat-bonded, etc.) between the wall and the washer, or even integrated with the flexible wall (e.g., molded in, etc.).

The washer is press-fit into the groove, thereby providing a seal at the wall opening and sealing off leakage of air to or from the inflatable article and the atmosphere and confining air or liquid passage to and through the passageway When assembled, a low-profile pathway for fluid communication from an external source into the flexible inflatable article through an opening in a flexible wall thereof is provided.

The connector assembly preferably further includes a valve which controls flow of air or liquid therethrough. The valve may be a one-way check valve, a two-way check valve, a pinch valve , or similar valve construction.

In one preferred embodiment for air inflation of an inflatable article, the connector assembly can be designed to provide a pressure gradient of at least 0.5 psi, preferably effective to a pressure gradient of at least 0,07 bar (1.0 psi)

In the embodiment for providing pressures relief under desired conditions, the external section of the connector assembly further incorporates a pressure relief valve which functions to release air or liquid from the inflatable article when the internal pressure exceeds the pressure required to open the valve. For example, in a preferred embodiment, the pressure relief valve comprises an opening, such as a round hole, a slit, or other suitable opening. In use, the pressure relief valve in the external section is covered by an appropriate valve material which covers, or otherwise closes, the opening and allows the inflatable article to be inflated to a desired extent The materials used, the size of the opening, and the location of the pressure relief opening in the external section can be tailored to provide the desired pressure required to open the pressure relief valve depending on the given application. A suitable pressure range for engaging the relief valve is 30-500 mbar. In one embodiment for a garment construction, a suitable pressure for engaging the relief valve is about 70 mbar. In an alternative embodiment, the pressure for engaging the relief valve is about 200 mbar. One particularly preferred construction of a pressure relief valve of this invention includes a pressure relief opening comprising a hole oriented in the external section, which is then covered by a valve material which comprises the fill tube for the connector assembly. In this embodiment,if the desired pressure required to open the pressure relief valve is reached, the valve material covering the opening is lifted by the air pressure in such a way that at least one air channel is created. The air channel allows air to pass through to the outside until the desired internal air pressure is reached, then the valve material repositions to close the air channel. Such pressure relief valves have a number of advantages, including ease of construction without the need for additional mechanical pieces or loose parts, and a simple construction which provides wear-resistance and soil-resistance, is economical to manufacture and is simple to replace. Furthermore, such valve constructions are safe for children and for users who desire minimal moving parts (e.g., airplane pilots, etc).

The assembly housing and insertable section preferably are integrally formed into a unitary construction, but the insertable section may be formed as a hollow tubular component having a rim slidably mounted externally thereover, with the rim having an external circumferential groove therearound.

In a further preferred embodiment, the elastic washer is affixed to the flexible wall, preferably adhesively, but it may be affixed under heat and pressure or other suitable means. Further, the washer may be affixed by integrally molding it to the flexible wall material. The washer is preferably an elastomer, either a natural elastomer or a synthetic elastomer such as a polyurethane elastomer or a silicone elastomer.

The connector assembly may be used to connect inflatable articles such as garments, including a vest, a jacket, a pant, a coat and similar constructions, a mattress, a sleeping bag, or other flexible articles to a source of inflation air. Additionally, such as connector assembly may be used to connect inflatable- articles such as collapsible canteens, bladders, heating/cooling pads and other flexible devices to a source of inflation liquid. The connector assembly provides advantages in, for example, ease of assembly, ease in use and relatively low profile of the connector in the finished article relative to prior art devices.

### BRIEF DESCRIPTION OF THE DRAWINGS

In the accompanying drawings:
Fig. 1 depicts a low profile connector assembly connecting a small manual air pump to the inlet opening of an inflatable garment, specifically an inflatable vest.
Fig. 2 shows a top perspective view of one example of the connector housing.
Fig. 3 shows a bottom perspective view of the connector housing of Fig.
Fig 4. is a cross-sectional view of an example of the connector housing.
Fig. 5 is a cross-sectional view of a connector assembly, connected to the flexible wall of an inflatable construction such as an inflatable garment, air mattress or collapsible canteen.
Fig. 6 is an exploded view of the connector assembly, including an auxiliary check valve and pump, shown schematically.
Fig. 7 depicts the low profile connector assembly connecting a small air pump to the inlet port of an inflatable air mattress.
Fig. 8 is an exploded view of an alternative connector.
Fig. 9 is a perspective view of a rim having a groove, which rim is employed in securing the alternate connector assembly to the connector housing.
Fig. 10 is a cross-sectional view of the alternate connector assembly including the connector housing, separate grooved rim and securing washer all connected together.
Figure 11 depicts the low profile connector assembly connecting a liquid fill valve to the inlet port of a collapsible canteen.
Figures 12a to 12c show top perspective views of one embodiment of the connector housing of the present invention with alternative valve opening geometries.
Figure 13a shows a perspective view of one embodiment of the pressure relief valve comprising a hole and with a tube as valve material.
Figures 13b and 13c are cross-sectional views of two embodiments of the pressure relief valve.
Figure 14a is a cross-sectional view of one embodiment of the pressure relief valve during the release of air or liquid.
Figure 14b is a cross-sectional view of a further embodiment of the pressure relief valve of the present invention.
Figure 14c shows a perspective view of the embodiment of Figure 14b.
Figures 15a and 15b are cross-sectional views of one embodiment of the pressure relief valve comprising a pressure relief opening with a rounded edge.

### DETAILED DESCRIPTION OF THE INVENTION

A low profile connector assembly is provided for connecting a flexible inflatable article such as an inflatable garment, air mattress or collapsible canteen to a source of inflation air or liquid. The connector includes a semi-rigid, hollow connector housing having a first, generally tubular, insertable section, insertable through an opening in a flexible wall of the inflatable article. A second external section extends oppositely from the insertable section and outwardly from the flexible wall upon insertion, the external section and the insertable section are connected and oriented generally at an angle with respect to each other to create a low profile relative to the article, most preferably the sections are oriented at right angles with respect to each other. The two sections provide a continuous air or liquid passageway therethrough into the inflatable article upon insertion therein. The passageway extends from an external opening in the external section, and is removably connectable thereat to a source of inflation air or liquid. The insertable section has an external circumferential groove therearound which, upon insertion into and through the opening in the flexible wall, is secured thereat by an elastic washer positioned immediately adjacent to and concentric with the wall opening. The washer is press-fit Into the groove, providing a seal at the wall opening.

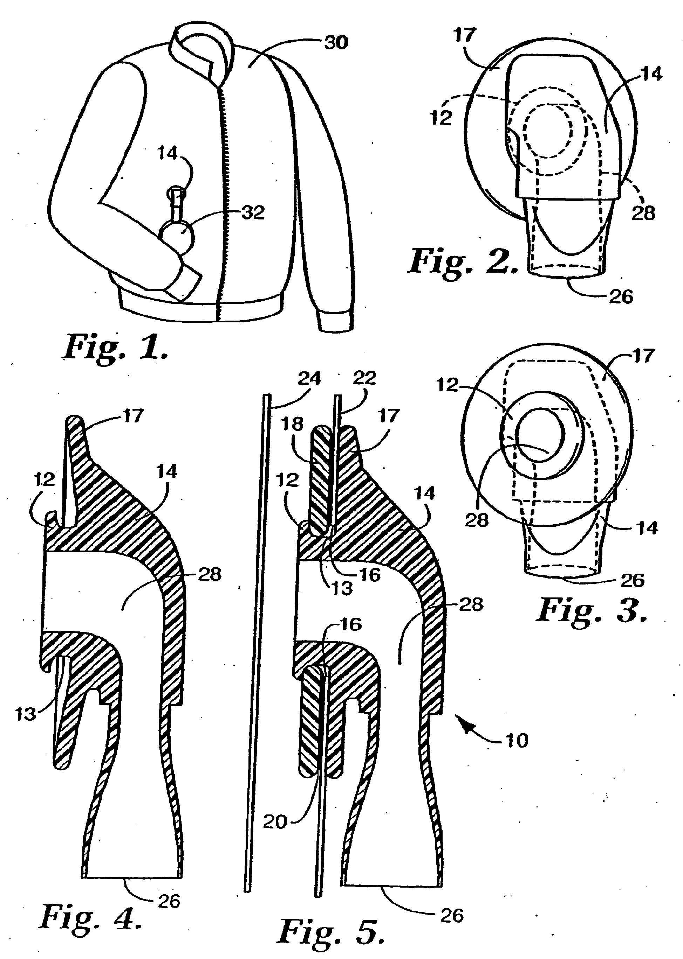

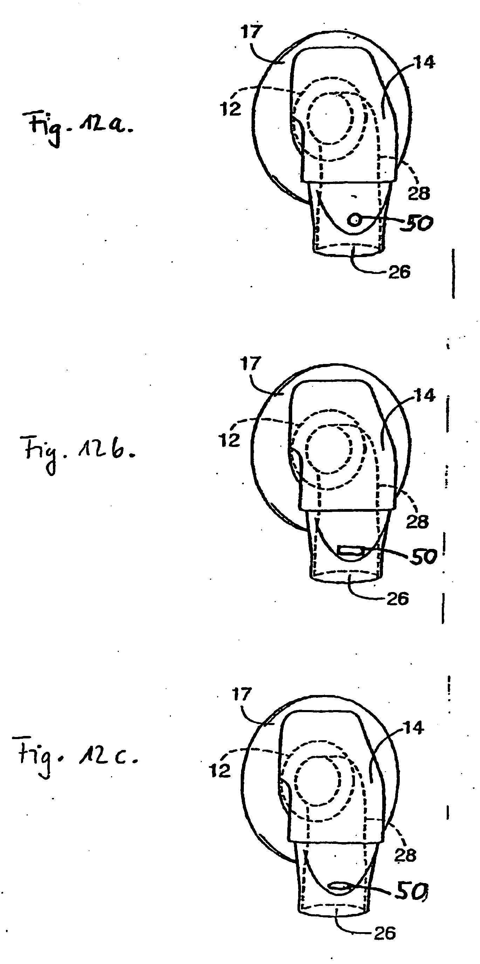

A detailed description of the invention and preferred embodiments is best provided with reference to Figures 12 to 15 of the accompanying drawings. Fig. 1 is a perspective view of an exemple of a connector assembly perspective view of an connector assembly connecting a small manual pump 32 to an inflatable vest. The connector housing 14, exposed externally, is visible in this figure.

The connector housing 14 is shown in detail in Fig. 2. The housing of this embodiment includes flanged base 17 and grooved insertable section 12 all molded as one piece with the outwardly extending external section 14, which in this external section is shown having a substantially right angle bend therein. It should be appreciated, however, that this external section may have any appropriate angle (i.e., 180° or less) depending on the desired form required by the article. For example, where significant projects from inflatable surfaces are objectionable in use, such right angle sections are preferred. Opening 26 is provided for removable connectivity to an external source of air or liquid, for example the manual pump depicted in Fig. 1. The passageway through the connector is depicted by dotted lines and Is described in detail below.

Fig. 3 shows the connector housing 14 viewed from its opposite side to that shown in Fig. 2. extending from the flanged base 17 is the insertable section 12 opening into the passageway 28 through the housing 14, depicted by dotted lines, to the external opening, or inlet, 26, adapted to be connected to an inflation air or liquid source.

Fig. 4 is a cross-sectional view of the connector housing 14 useful in the low profile assembly. Therein, the housing 14 comprises a unitary construct having a flanged base 17 which houses a passageway 28 extending from an inlet opening 26, through the housing 14, and extending through the internal (inserted) section 12 having circumferential groove 13 therearound. The housing 14 in this example is configured such that passageway 28 passes through a substantially right angle bend proceeding from the insertable section 12 through the housing 14 and to the inlet opening 26.

One example of the complete connector assembly 10 is depicted in cross-section in Fig. 5. Therein the housing 14 having passageway 28, extending from inlet 26 through the housing 14 and through insertable section 12, is inserted into and through opening 18 in the flexible wall 22 of an inflatable construction as shown. The opposite wall 24 of the inflatable article is shown for completeness. To secure the connector housing 14 in its inserted configuration, an elastic washer 18 is press-fit over the internal end of insertable section 12 and washer 18 seats within the circumferential groove 13 around the inserted section 12, thereby sealing against passage of air (or liquid) through the opening 16 and confining substantially all air (or liquid) to and through passageway 28. To further ensure against air or liquid leakage, the washer 18 may be, and preferably is, secured to the flexible wall 22 and around opening 16 by, for example, an adhesive layer 20, or by other means, such as by heat and pressure or other suitable securing means.

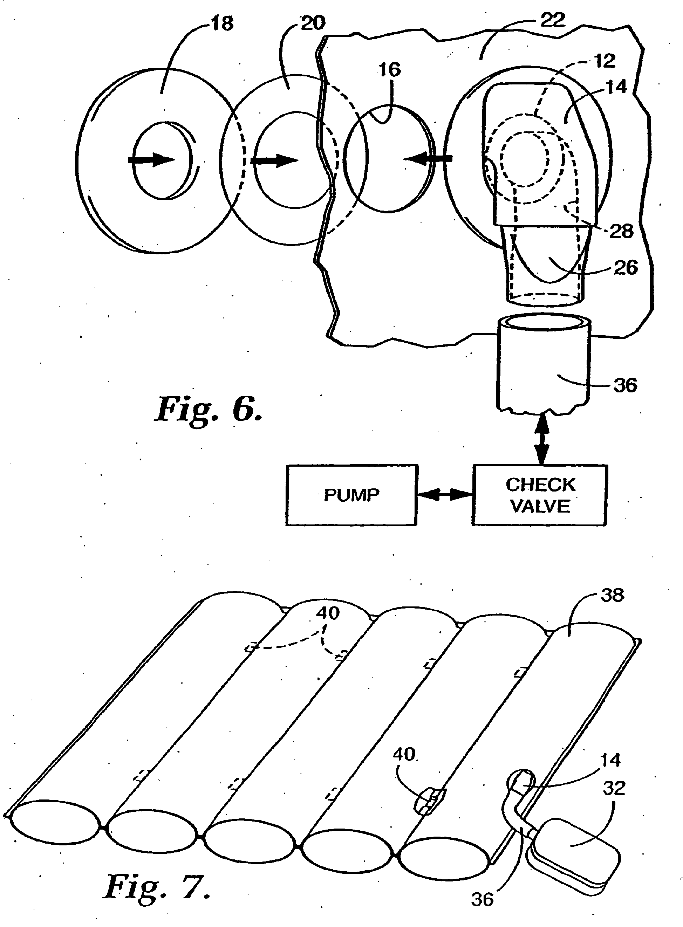

Fig. 6 shows an exploded view of the connector assembly 10 depicted in Fig. 5. In Fig. 6, a source of inflation air, in this example a reversible pump, is shown schematically connected through a check valve by connection 36 to inlet 26 of the housing 14. The passageway 28 through the housing 14 (depicted by dotted lines) passes through a substantially right angle and to the inlet section 12. The inlet section 12 is to be inserted through opening 16 in flexible wall 22, indicated by the arrow, and the washer 18 is to be press-fit into the circumferential groove 13 of the inserted section 12, the washer 18 being optionally and preferably secured around the opening 16 of the flexible wall 22 by means of the adhesive layer 20, also all as indicated by the arrows shown.

When the washer 18 is press-fit onto the insert section 12, the washer 18 must deform to allow the insert section to be inserted. After deforming, the washer must recover to seat into the groove 13. Washer 18 must have the ability to recover after such deformation, i.e., it must be elastic, in order to effect a seal when seated in groove 13.

A washer which is 100% elastic will seek to recover to its original, pre-deformed inside diameter (ID). If the outside diameter of the insert is larger than the ID of the washer, a compression seal will result.

If the washer 18 is constructed of an elastic material with a high durometer, it will strongly resist initial deformation, making it harder to install. However, a stronger seal will result upon installation.

If the washer 18 is made from a material which plastically deforms during installation, it will not fully recover to its original ID. So long as the amount of plastic deformation is small enough to allow for interference stress to be present after installation, a seal will be formed, albeit a weaker seal.

Some materials which are initially elastic will "stress relax" over time. For those, a seal may be formed initially to an acceptable level, but, after time, the seal will weaken to a point where there is no effective seal at pressure. The washer material must therefore be chosen to maintain an acceptable seal over its expected lifetime. Elastomer materials are particularly suitable materials for the elastic washer of the invention, in the form of either a natural elastomer such as natural rubber or a synthetic elastomer such as a polyurethane elastomer or a silicone elastomer. Cross-linked elastomer materials are most preferred for longest lifetime performance of the assembly.

In the connector assembly of the invention, the housing body 14 must be more rigid than the washer 18. A thick wall of the insertion section 12 will require more force to deform. Taking into account both the material properties of the housing and the washer (durometer, plasticity, stress relaxation) and the geometry of these components, one is able to tailor a connection to meet sealing requirements over a range of differential pressures and duration of effective seals over time.

Preferred materials of construction for the connector housing 14 will possess a durometer (Shore A) in the range of 50 Shore A or greater, more preferably in the range of 75 to 95 Shore A. The washer 18 may comprise any elastomer, preferably one having a durometer of 30 to 70 Shore A, more preferably 50 to 60 Shore A.

The elastic washer 18, when properly seated in groove 13, is in circumferential tension, resulting in a radially inwardly directed compression force which forms a seal capable of withstanding a pressure gradient. The washer 18 can be a separate component part, as shown and discussed above, or it may be constructed as an integral reinforcement around opening 16 comprising a thicker ring of elastic material surrounding the opening 16.

Preferably, the elastic washer 18 is a flat ring washer, which presents a low profile in use, and is made of an elastomer such as block copolymers, polyurethanes, silicones, and natural rubbers, more preferably comprising a polyurethane, and is adhesively bonded to the flexible wall 22 by any suitable adhesive, such as an epoxy, a polyurethane or a silicone. For example, a particularly preferred elastic washer/adhesive combination would be a crosslinked polyurethane washer with a reactive polyurethane adhesive. These low profile and flexible features of the washer allow for ease of packaging ant handling of the flexible inflatable construction with the washer installed thereon.

The connector assembly of the invention provides a relatively low cost, simple, flexible and low profile design added to the flexible article for use in such inflatable systems as garments, air mattresses, disposables, collapsible canteens, and other wearable/packable products. Seals capable of withstanding applied pressures of greater than 0,035 bar (0,5 psi) and exceeding 0,07 bar (1.0 psi), are readily achievable. However, it should be recognized that in certain applications lower applied pressures may exist in the final article.

As shown in Fig. 7, the connector assembly may also be used in constructions such as air mattresses 38 and similar articles. The air mattress 38 which is shown in the figure is comprised of individual compartments interconnected by openings 40. A small manual air pump 32 is connected via conduit 36 to the mattress 38 through the connector assembly, of which the housing 14 is visible in the figure.

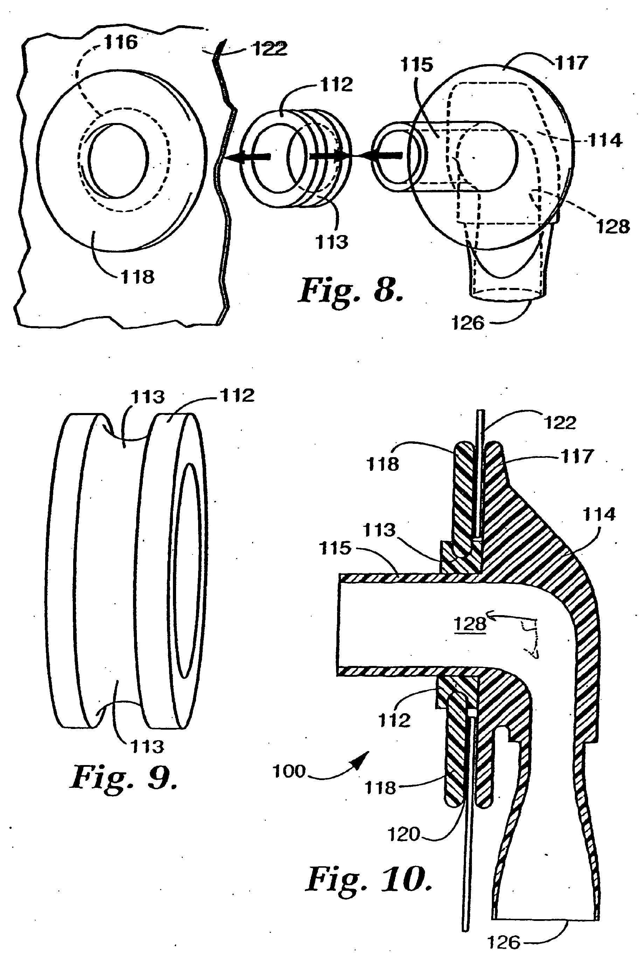

One possible alternative example 100 of the connector assembly is shown in Figs. 8-10. In Fig. 8, the alternate external housing section 114 has an inlet 126, which is adaptable to be connected to a source of air such as a pump, and which opens into through-passageway 128 which extends into the insertion tube 115. This insertion tube 115 is generally a cylindrical tube and is either molded integrally with the housing section 114 or is affixed to base 117 by glue or other suitable technique. The tube 115 is adapted to accept rim member 112, having circumferential groove 113, slidably thereover. The rim 112 is then adhesively affixed to tube 115 forming the connector housing insert section. The rim 112 and tube 115 assembly is then press-fit, as indicated by the arrow, into and through the center opening 116 of the wall, around which is secured, by adhesive or other means, the elastic washer 118, thereby completing the connector assembly. This assembly is shown in cross-sectional detail in Fig. 10. Fig. 10 specifically depicts the connector assembly 100, through which passageway 128 extends, comprising external housing 114, shown molded integrally with tubular member 115, and having elastic washer 118 bound by adhesive 120 to wall 122, as shown, and seated in groove 113 in rim 112, the rim 112 being adhesively (not shown) affixed to tube 115, all effecting a seal around opening 116 in the wall 122 of an inflatable article. Fig. 9 depicts a perspective view of rim 112 having circumferential groove 113 and is included for completeness.

In the construction of the connector assembly of the invention, the housing is preferably constructed of a polyurethane, more preferably a thermoplastic polyurethane. Where the external housing and insertion tube are constructed as separate components, both are preferably made of polyurethane, more preferably thermoplastic polyurethane. It should be appreciated, however, that other suitable materials may be used in the connector assembly, depending on the requirements of the specific application.

The check valve shown schematically in Fig. 6 may be a one-way check valve, a two-way check valve or a pinch valve, depending on the circumstances of the particular Inflatable construction and design preferences. A suitable pump or other source of air will be known to those skilled in this art.

The effectiveness of the seal formed when the elastic washer is seated within the groove of the insertion section is dependent upon the geometry and relative elasticity of the component parts. As an example, a washer of elastomeric urethane having a center opening inside diameter (ID) of 9.1 mm (0.36 inch) an outside diameter (OD) of 31.8 mm (1.25 inch) and a thickness of 3,18 mm (0.125 inch), when press-fit into a groove of OD 11,7mm (0,46 inch) of a thermoplastic polyurethane insertion section provided a seal to a pressure gradient exceeding 0,07 bar (1.0 psi) between the interior of an inflatable and the atmosphere. One skilled in this art will readily appreciate that effective seals may be achieved over a wide range of pressure gradients using the principles of the invention set forth herein.

Certain assemblies described above include adhesive bonds between components. A preferred adhesive is reactive polyurethane, although other adhesives may be suitable for particular application, and specific adhesives should not limit the scope of the invention in any way.

Elastic washers useful in the invention may be composed of natural rubbers, synthetic elastomers such as polyurethanes, silicones, etc., and others. Cross-linked forms of these materials often provide desirable advantages such as durability and other expected features of these cross-linked materials which are desirable in the articles of this invention. All such suitably elastic washers are within the scope of the invention.

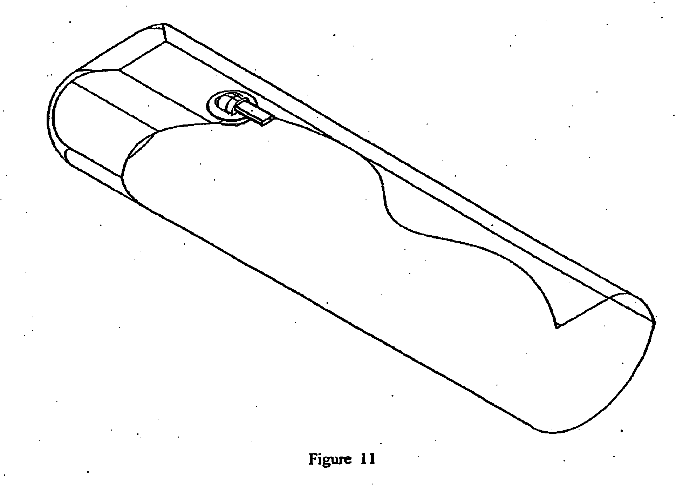

The connector assembly of the invention may be used with many types of inflatable flexible articles, including air mattresses as discussed, garments such as jackets, vests, pants, coats and other similar items, and sleeping bags, to name a few. In addition, inflatable flexible articles which are inflated with liquid, such as canteens and the like, can be fabricated using the connector assemblies of this invention. Figure 11 depicts a connector assembly attached to a collapsible canteen.

Figures 12- 14 depict an embodiment of the invention, wherein the connector assembly incorporating a pressure relief valve of the invention. The pressure relief opening in the external section of the connector, the valve covering material and the components in operation, respectively, are shown and described below in more detail

Figure 12a depicts a connector with a pressure relief opening 50 according to the invention. The pressure relief opening 50 is arranged in the external section of the connector. The pressure relief opening can have any possible geometrical form and can be arranged at any place on the circumference of the external section, e.g. on the front side, on the back side or on the lateral side. Preferably, the pressure relief opening is adjacent to the external inlet 26 of the external section. In figure 12a, the opening is in the form of a round hole and arranged on the front side of the external inlet. In Figure 12b the opening has the form of a single slit and in Figure 12c the opening is elliptical.

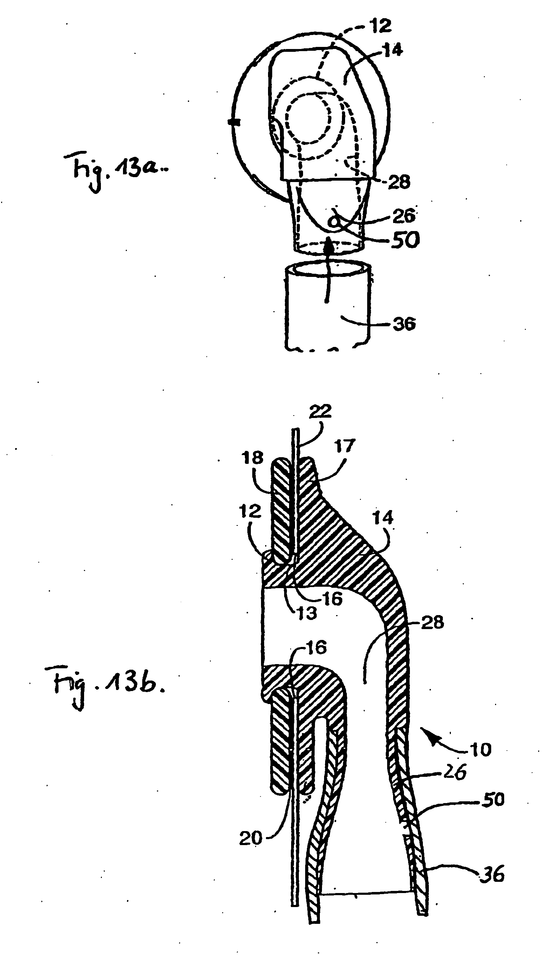

Fig.13a shows a view of the connector assembly with a pressure relief opening 50 and a valve material which covers the opening and allows the pressure relief valve to be actuated under a desired pressure. The valve material is preferably the connection 36 in the form of a tube. The tube is put over the Inlet 26 and is therefore covering the pressure relief opening in an airtight manner. In another embodiment, the valve material may be in the form of a narrow tube just covering the opening. The valve material must have the ability to deform sufficiently to allow the formation of an air channel by a desired pressure. After deforming, the valve material must recover to cover in an airtight manner the pressure relief opening 50. The valve material must have the ability to recover after such deformation, i.e., it must be elastic, in order to effect a seal when covering the opening. The valve material may, for example, be made from elastomer materials like silicone, polyurethane, rubber, PVC, and the like. Preferred materials for the tube will possess a durometer (Shore A) in the range of 30 to 90 Shore A. In one preferred embodiment, the tube connection is made of siliocone having a durometer of around 50 Shore A.

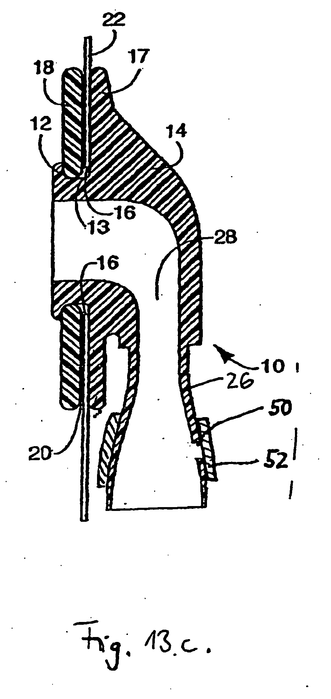

Fig. 13b is a cross-sectional view of the connector with the pressure relief opening 50, and the valve material 36 according to Figure 13a is covering the opening. Preferably, the valve material is a silicone tube which is also used as a source of inflation air. Another embodiment of the complete connector assembly 10 according to this invention is depicted in cross-section in Fig.13c, wherein the pressure relief opening 50 is covered with a narrow tube 52.

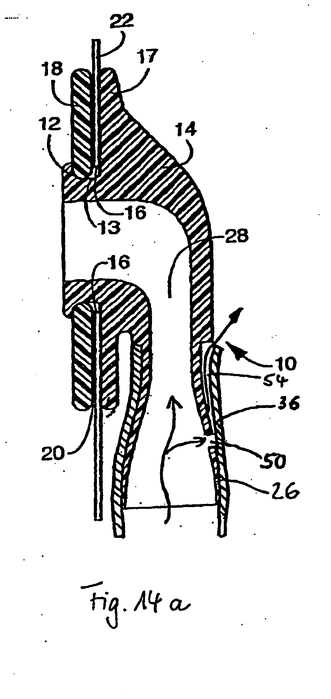

Figure 14a shows a cross-sectional view of another embodiment of the pressure relief valve according to the invention. The pressure relief valve is shown in an open status in which air is allowed to extend through the pressure relief opening 50 to the outside. The valve material is usually covering the opening in an airtight manner as described in Figure 13b. When the internal pressure exceeds the pressure required to open the valve, the valve material covering the opening forms an air channel 54 to release air to the outside.

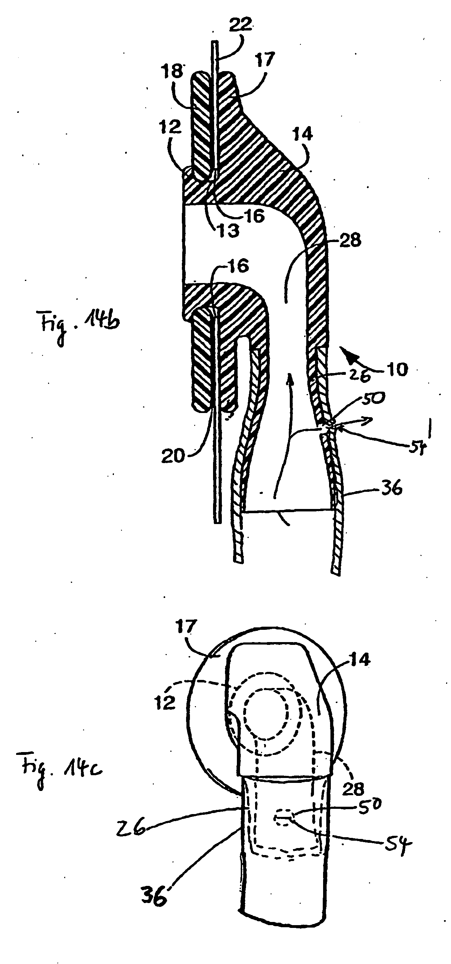

Figure 14b and Figure 14c show perspective views of a further embodiment of the pressure relief valve. Specifically, Fig. 14b shows a cross-sectional view of the connector including a pressure relief valve. A pressure relief opening 50 is arranged in the external inlet 26. Said opening is covered with a valve material 36, preferably in the form of an elastic tube, which is pulled over the complete external insert. A longitudinal slit 54 is oriented in the valve material directly atop said opening 50. If the desired pressure required to open the valve is reached, the slit is forming an air channel through which the air can be released. Below said desired pressure, the slit is closed in an airtight manner. Instead of a slit, any other sliced form is also contemplated, such as a crossed slit, etc. Also, in another embodiment, the slit can be oriented beside the pressure relief opening depending on the desired pressure to open the valve. The pressure relief valve is shown in an open status in which air is allowed to pass through the pressure relief opening 50 to the outside, or external atmosphere. Fig. 14c depicts a connector with a pressure relief valve according to Fig. 14b. The pressure relief opening 50 is covered in an airtight manner with a valve material 36. Atop the opening 50, a thin longitudinal slit 54 is arranged in the valve material.

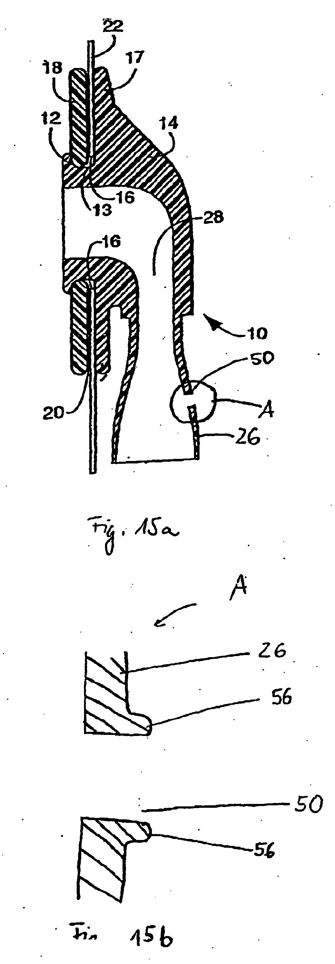

Figure 15a and Figure15b show a preferred embodiment of the pressure relief opening 50 in a cross-sectional perspective view. The opening 50 comprises an edge 56 surrounding the opening. In one embodiment the edge may be a rounded edge, however, other suitable forms are also possible. The edge 56 has the function to fix the valve material over the opening and to prevent any slipping or sliding of the valve material on the external inlet. In one preferred embodiment of the invention, wherein the opening has a diameter of about 4 mm, the rounded edge could comprise a diameter of about 0.3 mm.

The material used, the size of the opening, and the location of the pressure relief opening in the external section can be tailored to provide the desired pressure required to open the pressure relief valve depending on the given application. In a preferred embodiment, the relation between the material used, the size of the opening and the desired pressure is as follow:
- F/A=p: F= recovering force dependend on the modulus (measured with the durometer) of the valve material
(Shore A),
A= size of the hole
p= desired pressure to open the valve
In one particularly preferred embodiment, the connector according to the invention comprising a pressure relief valve for an internal pressure of 70 mbar. Therefore, the pressure relief opening has an diameter of 4 mm and is located in the front side of the insert inlet 26. The opening has a distance to the housing 14 of 4 mm. The valve material is made of silicone material posessing a durometer of 50 Shore A.

Suitable flexible materials for at least the portion of the article wall to which the connector assembly is affixed are those materials having a flexural rigidity, as described in more detail herein, of 50,000 N*m or less, preferably 1000 N*m or less, and most preferably 200 N*m or less. Non-limiting examples of materials having these flexibitities include a wide range of fabrics, including wovens and non-wovens, resin impregnated fabrics, elastomeric sheets and other rubber-like materials. The flexible articles of the present may comprise some regions containing materials of higher stiffness; however, the inflatable regions of the articles wherein the low profile connector assembly will typically comprise flexible materials.

Embodiments of the present invention will now be described by way of example only with reference to the following examples.

### TEST

### Flexibility/Flexural Rigidity

The flexibility, or flexural rigidity, of suitable articles to which the connector assemblies of the present invention are attached can be determined using the "Standard Test Method for Stiffness of Nonwoven Fabrics Using the Cantilever Test", Method Number ASTM D5732-95 (Reapproved 2001).

This test method requires a 1" wide by 8" long sample. The sample is slid across a horizontal surface at a controlled rate so that one end overhangs the support platform. As the sample slides across the support platform and the overhang length increases, the cantilevered sample bends downward. When the downward bend angle reaches 0.785 radians (41.5°), the overhang length is measured. The overhang length, sample mass, and sample dimensions are then used to calculate the bending length and the flexural rigidity.

### EXAMPLE 1

The results for several flexible wall materials useful for atachment of the connector assembly of this invention are given in Table 1 below. The more flexible the material, the lower the bending length and the lower the flexural rigidity.

**TABLE 1 - BENDING LENGTH/FLEXURAL RIGIDITY (ASTM D5732)**

| Container Material | Bending length (mm) | Flexural Rigidity |
|---|---|---|
| | | (N*m) |
| Versollan RU 2204 | 70.0 | 38071 |
| (GLS Corporation, McHenry, IL) | | |
| 2-layer GORE-TEX^{®} laminate | 23.0 | 93 |
| GORE® Laminate # ECAT 001000B | 16.5 | 73 |

The flexible connector system of this invention is suitable for use in any article constructed, at least in the region where the connector assembly is to be affixed, of a material having a flexural regidity less than 50,000 N*m, more preferably less than 1000 N*m, and most preferably less than 200 N*m.

### EXAMPLE 2

An inflatable jacket was manufactured substantially in accordance with the teachings of Example 1 of U.S. Patent Application Serial No. 10/230,889, except that the inflation/deflation construct was fabricated in accordance with Figures 1-5 of the present application. The washer of the construct comprised a cross-linked polyurethane with a hardness of 55 Shore A. The connector of the construct comprised a crosslinked polyurethane with a hardness of 85 Shore A. To insert the inflation/deflation construct, as noted in 10/230,889, a hole was cut in one of the fabric panels and the construct was attached. The inflation/deflation construct was bonded to the fabric panel using a polyurethane adhesive.

### EXAMPLE 3

The pressure relief valve is preferably constructed during the construction of the connector assembly, preferably by injection molding, and having a geometry such as described with respect to Example 2. The pressure relief opening is formed either during the injection molding process or by drilling, a hole into the inlet.

During the installation of the connector assembly, the valve material in form of the connection tube 36 is arranged over the hole and held or fixed as described.

While the invention has been disclosed herein in connection with certain embodiments and detailed descriptions, it will be clear to one skilled in the art that modifications or variations of such details can be made without deviating from the scope of this invention as defined by the claims hereinbelow.

## Claims

1. A connector assembly (10), for connecting an inflatable article to an inflation source, the assembly comprising:
a semi-rigid, hollow connector housing (14) having a first, generally tubular, insertable section (12) insertable through an opening (16) in a flexible wall (22) of said inflatable articles, and a second external section extending oppositely from the external section and the insertable section being connected, the two sections providing a continuous air passageway (28) therethrough into the inflatable article upon insertion therein, said passageway extending from an external opening (26) in said external section and being removably connectable thereat to said source of inflation fluid, through the connector assembly, and into the Inflatable article,
wherein said insertable section has an external circumferential groove (17), therearound which, upon insertion into and through said wall opening, is secured thereat by an elastic washer (18) positioned immediately adjacent to and concentric with said wall opening, said washer being press-fit into said groove, the washer providing a seal at said wall opening, thereby sealing off leakage of fluid to or from said inflatable article and confining fluid passage to and through said passageway, thereby providing, when assembled, a low-profile pathway for fluid communication from said external source into said inflatable article through a wall opening thereof, and
wherein said external section further comprises a pressure relief valve (50).

2. The connector assembly of claim 1 providing a seal effective to a pressure gradient of at least 70 mbar.

3. The connector assembly of claim 1 providing a seal effective to a pressure gradient of at least 200 mbar.

4. The connector assembly of claim 1 wherein the housing and insertable section are integrally formed into a unitary construction.

## Patentansprüche

1. Verbinderanordnnng (10) zum Verbinden eines aufblasbaren Artikels mit einer Aufblasquelle,
wobei die Anordnung umfasst:
ein halbstarres, hohles Verbindergehäuse (14) mit einem ersten, im Allgemeinen rohrförmigen, einsetzbaren Abschnitt (12), der durch eine Öffnung (16) in einer flexiblen Wand (22) des aufblasbaren Artikels eingesetzt werden kann, und einen zweiten äußeren Abschnitt, der sich beim Einsetzen, gegenüberliegend von dem einsetzbaren Abschnitt und nach außen hin von der flexiblen Wand, erstreckt,
wobei der äußere Abschnitt und der einsetzbare Abschnitt verbunden werden, wobei die zwei Abschnitte einen durchgehenden Luftdurchgang (28) dort hindurch in den aufblasbaren Artikel bereitstellen, wenn sie in diesen eingefügt werden, wobei sich der Durchgang von einer äußeren Öffnung (26) aus in den äußerten Abschnitt hin erstreckt und dort entfernbar mit der Quelle des Aufblasfluids durch die Verbinderanordnung hindurch und in den aufblasbaren Artikel hinein, verbunden werden kann,
wobei der einsetzbare Abschnitt eine äußere periphere Nute (13) da herum aufweist, die, beim Einsetzen in und durch die Wandöffnung, dort durch eine elastische Scheibe (18) gesichert ist, die unmittelbar angrenzend an und konzentrisch mit der Wandöffnung positioniert ist, wobei die Scheibe durch eine Presspassung in die Nute eingeführt wird, wobei die Scheibe eine Dichtung an der Wandöffnung bereitstellt, wodurch ein Fluidleck zu oder von dem aufblasbaren Artikel abgedichtet wird und wodurch ein Fluiddurchtritt zum und durch den Durchgang ermöglicht wird, wodurch, wenn zusammengebaut, ein Durchgang mit niedrigem Profil für die Fluidkommunikation von der äußeren Quelle in den aufblasbaren Artikel durch eine Wandöffnung davon ermöglicht wird, und
wobei der äußere Abschnitt ferner ein Überdruckventil (50) umfasst.

2. Verbinderanordnung nach Anspruch 1, die eine Dichtung bereitstellt, die bei einem Druckgradienten von mindestens 70 mbar wirksam ist,

3. Verbinderanordnung nach Anspruch 1, die eine Dichtung bereitstellt, die bei einem Druckgradienten von mindestens 200 mbar wirksam ist.

4. Verbinderanordnung nach Anspruch 1, wobei das Gehäuse und der einsetzbare Abschnitt vollständig in einer einheitlichen Konstruktion gebildet sind.

## Revendications

1. Assemblage de connecteurs (10) pour connecter un article gonflable à une source de gonflage, l'assemblage comprenant:
un boîtier de connecteur (14) creux, semi-rigide, ayant une première section insérable (12), généralement tubulaire, qui est insérable à travers une ouverture (16) dans une paroi flexible (22) dudit article gonflable, et une seconde section externe, qui s'étend de façon opposée à partir de la section gonflable et de façon externe à partir de ladite paroi flexible lors de l'insertion, la section externe et la section insérable étant connectées, les deux sections fournissant un passage d'air continu (28) à travers celles-ci dans l'article gonflable lors de l'insertion, ledit passage s'étendant à partir d'une ouverture externe (26) dans ladite section externe et pouvant y être connecté, à ladite source de fluide de gonflage, à travers l'assemblage de connecteurs, et dans l'article gonflable,
dans lequel ladite section insérable est entourée d'une rainure cïrconférentielle externe (13) qui, lors de l'introduction dans et à travers ladite ouverture de paroi, y est fixée par une bague élastique (18) positionnée de façon directement adjacente et de façon concentrique à ladite ouverture de paroi, ladite bague étant ajustée par serrage dans ladite rainure, la bague fournissant un joint à ladite ouverture de paroi, empêchant ainsi une fuite de fluide vers ledit ou à partir dudit article gonflable et conférant un passage du fluide vers ledit et à travers dudit passage, fournissant ainsi, lors de l'assemblage, un passage de profil bas pour la communication du fluide à partir de ladite source externe dans ledit article gonflable à travers une ouverture de paroi de celui-ci, et
dans lequel ladite section externe comprend en outre une soupape de détente de pression (50).

2. Assemblage de connecteurs selon la revendication 1, fournissant un joint efficace à un gradient de pression d'au moins 70 mbar.

3. Assemblage de connecteurs selon la revendication 1, fournissant un joint efficace à un gradient de pression d'au moins 200 mbar.

4. Assemblage de connecteurs selon la revendication 1, dans lequel le boîtier et la section insérable sont formés d'un seul tenant dans une construction unitaire.
